# EUROPÄISCHE PATENTANMELDUNG

(11) **EP 3 456 999 A1**
(43) Veröffentlichungstag der Anmeldung: **20.03.2019**
(21) Anmeldenummer: 18191301.3
(22) Anmeldetag: 28.08.2018
(51) Int. Cl.: F16H 57/08

(54) **PLANETENGETRIEBEVORRICHTUNG FÜR EINE STRÖMUNGSMASCHINE**

(30) Priorität: 15.09.2017 DE 102017008675
(71) Anmelder: Rolls-Royce Deutschland Ltd & Co KG, 15827 Blankenfelde-Mahlow (DE)
(72) Erfinder: Venter, Daniel Gideon, 15827 Blankenfelde-Mahlow (DE); Schwarze, Jan, 15827 Blankenfelde-Mahlow (DE)

(57) **Zusammenfassung**

Es wird eine Planetengetriebevorrichtung (5) für eine Strömungsmaschine mit einem Planetenträger (19) und wenigstens einem darauf drehbar angeordneten Planetenrad (21) beschrieben. Das Planetenrad (21) ist in axialer Richtung zwischen zwei Planetenträgerbereichen (24, 25) angeordnet, mit welchen jeweils eine Trägereinrichtung (28) drehfest verbunden ist, auf der das Planetenrad (21) drehbar gelagert ist. Die Planetenträgerbereiche (24, 25) sind auf ihren dem Planetenrad (21) abgewandten Außenseiten (39, 40) mit jeweils einer einen Verbindungsbereich (22, 23) mit der Trägereinrichtung (28) umgreifenden Konusfläche (37, 38) ausgebildet, deren Durchmesser mit zunehmendem axialen Abstand vom Planetenrad (21) abnehmen. Die Konusflächen (37, 38) und die jeweils mit darauf abgestimmten Konusflächen (53, 63) einer Spanneinrichtung (46), die die Konusflächen (37, 38) der Planetenträgerbereiche (24, 25) radial umfassen, wirken derart zusammen, dass an den Verbindungsbereichen (23, 24) zwischen der Trägereinrichtung (28) und den Planetenträgerbereichen (24, 25) jeweils aus einer über ein Koppelelement (47) der Spanneinrichtung (46) auf die Konusflächen (37, 38) der Planententrägerbereiche (24, 25) aufgeprägten axialen Spannkraft der Spanneinrichtung (46) resultierende und die Verbindungsbereiche (22, 23) in radialer Richtung nach innen verpressende Kraft angreift. Hierfür stehen die Konusflächen (53, 63) der Spanneinrichtung über das Koppelelement (47) miteinander in Wirkverbindung.

## Beschreibung

Die Erfindung betrifft eine Planetengetriebevorrichtung für eine Strömungsmaschine gemäß der im Oberbegriff des Patentanspruches 1 näher definierten Art.

Aus der Praxis sind Strahltriebwerke bekannt, bei denen ein Bläser mittels eines Planetengetriebes mit einer Niederdruckturbine verbunden ist. Das Planetengetriebe ist mit feststehendem Hohlrad und rotierendem Planetenträger ausgeführt, Dabei ist der Planetenträger mehrteilig ausgebildet. In axialer Richtung des Strahltriebwerks sind die Planetenräder zwischen zwei Planetenträgerbereichen drehbar auf damit verbundenen Trägereinrichtungen angeordnet. Die Trägereinrichtungen umfassen jeweils einen Bolzen, die über Presspassungen mit den Planetenträgerbereichen drehfest wirkverbunden sind. Zwischen den Planetenrädern und den Bolzen sind Gleit- oder Wälzlager vorgesehen, über die die Drehentkopplung realisiert ist.

Die Presspassungen werden üblicherweise auf kostengünstige Art und Weise als Dehnverbände und/oder als Schrumpfverbände ausgeführt. Dabei werden Dehnverbände bekannterweise durch das Unterkühlen des Innenteils und Schrumpfverbände durch das Erwärmen des Außenteils gefügt. Bei großen Übermaßen werden beide Verfahren kombiniert.

Im Betrieb des Strahltriebwerks greifen aufgrund der hohen Drehzahlen des Planetenträgers an den Planetenrädern des Planetengetriebes große Fliehkräfte an. In Abhängigkeit der jeweils gewählten Ausführung des Planetengetriebes werden nicht nur Fliehkräfte sondern auch die Lasten des jeweils im Betrieb zu übertragenden Drehmomentes eingeleitet. Die jeweils daraus resultierenden Kräfte werden über die Presspassungen in die Planetenträgerbereiche eingeleitet.

Problematisch dabei ist jedoch, dass die aus den zwischen den Bolzen und den Planetenträgerbereichen vorgesehenen Presspassungen resultierenden Haltekräfte bei Überschreiten einer zulässigen Belastungsgrenze überwunden werden und unerwünschte Relativbewegungen zwischen den Bolzen und den Planetenträgerbereichen auftreten. Aus solchen Relativbewegungen resultiert unerwünschterweise Verschleiß im Bereich der Bolzen und der Planetenträgerbereiche, die die Funktionsweise des Planetengetriebes auf Dauer beeinträchtigen und damit die Lebensdauer des Planetengetriebes herabsetzen.

Aus der nicht veröffentlichten GB 1617033.4 der Anmelderin ist eine Lösung bekannt, über die solche die Lebensdauer eines Planetengetriebes herabsetzende Relativbewegungen im Bereich zwischen den Lagerbolzen der Planetenräder und dem Planetenträger vermieden werden sollen. Hierfür wird vorgeschlagen, in den Verbindungsbereichen zwischen den Bolzen und den Planetenträgerbereichen jeweils wenigstens einen Keil vorzusehen, um möglichst hohe Haltekräfte der Presspassungen zwischen den Bolzen und den Planetenträgerbereichen zu erzielen.

Die Keile werden durch Verwendung von flüssigem Stickstoff und Einspritzen von unter Hochdruck stehendem Öl zwischen die Bolzen und die Planetenträgerbereiche eingeschoben, was jedoch mit einem hohen Montageaufwand verbunden ist. Über die Keile werden dabei in den die Bolzen umgebenden Planetenträgerbereichen in den Bolzen Vorspannungen erzeugt, um jeweils die den Relativdrehbewegungen der Bolzen gegenüber den Planetenträgerbereichen entgegenwirkenden Haltekräfte zur Verfügung zu stellen.

Die im Betrieb an den Planetenrädern angreifenden Belastungen überlagern sich teilweise mit den eingebrachten Vorspannungen. Diese Überlagerungen begünstigen wiederum ein Lösen der Presspassungen zwischen den Bolzen und den Planetenträgerbereichen, da diese eine Reduktion der im Bereich der Presspassungen wirkenden Haltekräfte bewirken.

Um das Lösen der Presspassungen im Betrieb sicher vermeiden zu können, ist die Steifigkeit der Planetenträgerbereiche entsprechend groß auszulegen, was jedoch ein Gewicht des Planetengetriebes nachteilhafterweise erhöht.

Der vorliegenden Erfindung liegt daher die Aufgabe zugrunde, eine durch ein geringes Bauteilgewicht und durch eine hohe Lebensdauer gekennzeichnete sowie einfach zu montierende Planetengetriebevorrichtung für eine Strömungsmaschine zur Verfügung zu stellen.

Erfindungsgemäß wird diese Aufgabe mit einer Planetengetriebevorrichtung mit den Merkmalen des Patentanspruches 1 gelöst.

Die erfindungsgemäße Planetengetriebevorrichtung für eine Strömungsmaschine umfasst wenigstens einen Planetenträger und wenigstens ein darauf drehbar angeordnetes Planetenrad. Das Planetenrad ist in axialer Richtung zwischen zwei Planetenträgerbereichen angeordnet, mit welchen eine Trägereinrichtung drehfest verbunden ist. Auf der Trägereinrichtung ist das Planetenrad drehbar gelagert.

Erfindungsgemäß sind die Planetenträgerbereiche auf ihren dem Planetenrad abgewandten Außenseiten mit jeweils einer einen Verbindungsbereich mit der Trägereinrichtung umgreifenden Konusfläche ausgebildet. Die Durchmesser der Konusflächen nehmen mit steigendem axialem Abstand vom Planetenrad ab. Die Konusflächen der Planetenträgerbereiche wirken jeweils mit darauf abgestimmten Konusflächen einer Spanneinrichtung zusammen, die die Konusflächen der Planetenträgerbereiche radial umfassen. Dabei wirken die Konusflächen der Planetenträgerbereiche und die Konusflächen der Spanneinrichtung derart zusammen, dass an den Verbindungsbereichen zwischen den Trägereinrichtungen und den Planetenträgerbereichen jeweils eine aus einer über ein Koppelelement der Spanneinrichtung auf die Konusflächen der Planententrägerbereiche aufgeprägten axialen Spannkraft der Spanneinrichtung resultierende und die Verbindungsbereiche in radialer Richtung nach innen verpressende Kraft angreift. Hierfür stehen die Konusflächen der Spanneinrichtung über das Koppelelement miteinander in Wirkverbindung.

Bei der erfindungsgemäß ausgebildeten Planetengetriebevorrichtung wird mittels der Spanneinrichtung, der im Wesentlichen die Funktionsweise eines Zugankers zugrunde liegt, in den Verbund aus den Planetenträgerbereichen, der Trägereinrichtung und der Spanneinrichtung eine in axialer Richtung der Trägereinrichtung wirkende Kraft eingebracht. Durch das Zusammenwirken der Planetenträgerbereiche und der Spanneinrichtung im Bereich der Konusflächen, d. h. der jeweiligen Außenkonen der Planetenträgerbereiche und jeweiligen Innenkonen der Spanneinrichtung resultieren radial nach innen auf den Verbund aus den Planetenträgerbereichen und der Trägereinrichtung wirkende Vorspannkräfte.

Aus dieser eine Vorspannung erzeugenden Kraft resultiert im Bereich der vorzugsweise als Presspassung zwischen den Planetenträgerbereichen und der Trägereinrichtung ausgeführten Verbindung ein Anpressdruck. Diese erzeugte Vorspannung ist den entstehenden Kräften im Betrieb entgegengerichtet. Das bietet den Vorteil, dass Relativdrehbewegungen zwischen der Trägereinrichtung und den Planetenträgereinrichtungen im Betrieb erst bei auf den Verbund aus der Trägereinrichtung und die beispielsweise plattenförmig ausgeführten Planetenträgerbereiche wirkenden und aus den Fliehkräften resultierenden Belastungen auftreten, die größer sind als bei bekannten Planetengetriebevorrichtungen, wenn die beteiligten Bauteile jeweils mit der gleichen Steifigkeit ausgelegt sind.

Wird die erfindungsgemäße Planetengetriebevorrichtung mit Bauteilsteifigkeiten ausgelegt, zu den die Relativdrehbewegungen zwischen der Trägereinrichtung und den Planetenträgerbereichen bei Vorliegen des gleichen Belastungsniveaus wie bei herkömmlichen Planetengetriebevorrichtung auftreten, ist die erfindungsgemäße Planetengetriebevorrichtung vorteilhafterweise durch ein geringeres Bauteilgewicht als eine bekannte Planetengetriebevorrichtung gekennzeichnet.

Des Weiteren besteht vorteilhafterweise auch die Möglichkeit, Presspassungen zwischen der Trägereinrichtung und den Planetenträgerbereichen mit geringeren Übermaßen auszuführen. Dadurch sind im Bereich der Presspassung wirkende Belastungen gering, womit eine Montage der Bauteile mit geringen Fertigungstoleranzen und ohne großes Beschädigungsrisiko durchführbar ist.

Bei einer vorteilhaften Ausführungsform der erfindungsgemäßen Planetengetriebevorrichtung schließen die Konusflächen der Planetenträgerbereiche und die Konusflächen der Spanneinrichtung mit einer Drehachse des Planententrägers jeweils einen Winkel zwischen 0,5° bis 30° ein. Insbesondere wenn der Winkel zwischen 1° und 10° liegt, kann eine gewünscht große, der im Betrieb wirkenden Fliehkraft entgegen gerichtete Kraft durch ein Zusammenwirken der Spanneinrichtung mit den Planetenträgerbereichen auf konstruktiv einfache Weise erzielt werden.

Die Spanneinrichtung ist bei einer einfach herstellbaren und mit geringem Aufwand montierbaren weiteren Ausführungsform der erfindungsgemäßen Planetengetriebevorrichtung mit einem Scheibenelement und mit einem Spannelement ausgeführt. Dabei ist das Spannelement zur Erzeugung der in axialer Richtung der Spanneinrichtung wirkenden Spannkraft auf das Koppelelement aufschraubbar. Des Weiteren ist das Scheibenelement mit einer der Konusflächen der Spanneinrichtung ausgeführt und in montiertem Zustand der Spanneinrichtung auf der dem Planetenrad abgewandten Seite eines der Planetenträgerbereiches zwischen dem Spannelement und dem Planetenträgerbereich angeordnet.

Bei einer besonders einfach zu montierenden Ausführungsform der erfindungsgemäßen Planetengetriebevorrichtung sind das Scheibenelement und das Spannelement einstückig ausgebildet.

Um Relativbewegungen zwischen den miteinander zusammenwirkenden Konusflächen der Spanneinrichtung den Konusflächen der Planetenträgerbereichen während der Montage zu vermeiden, sind das Spannelement und das Scheibenelement bei einer konstruktiv einfachen Ausführungsform der erfindungsgemäßen Planetengetriebevorrichtung als separate Bauteile ausgebildet.

Das Koppelement ist bei einer ebenfalls einfach montierbaren Ausführungsform der erfindungsgemäßen Planetengetriebevorrichtung einstückig mit einem Spannelement der Spanneinrichtung ausgebildet. Dabei ist eine der Konusflächen der Spanneinrichtung im Bereich des Spannelementes vorgesehen, das einstückig mit dem Koppelelement ausgeführt ist. Das Spannelement ist auf der dem Planetenrad abgewandten Seite des Planetenträgerbereiches angeordnet, mit dessen Konusfläche die Konusfläche des Scheibenelementes in Wirkverbindung steht

Die Trägereinrichtung weist bei einer weiteren Ausführungsform der erfindungsgemäßen Planetengetriebevorrichtung jeweils Anschlagflächen auf. Mit den Anschlagflächen wirkt die Trägereinrichtung mit den Planetenträgerbereichen im Bereich von dem Planetenrad zugewandten Seiten der Planetenträgerbereiche zusammen. Über die Anschlagflächen ist auf konstruktiv einfache Art und Weise ein Abstand in axialer Richtung zwischen den Planetenträgerbereichen definiert.

Dabei kann die vorzugsweise bolzenartig oder hülsenartig ausgeführte Trägereinrichtung zur Einstellung eines in axialer Richtung zwischen den Einfasseinrichtungen vorliegenden Abstands ein beispielsweise als Buchse ausgeführtes Abstandshalteelement aufweisen. Des Weiteren kann die Trägereinrichtung einstückig mit dem Abstandshalteelement ausgeführt sein. Es kann auch vorgesehen sein, dass die Trägereinrichtung ein mit den Planetenträgerbereichen zusammenwirkendes Trägerelement und ein separat ausgeführtes Abstandselement aufweist. In das Abstandselement kann beispielsweise ein Innenring einer Lagereinrichtung des Planetenrads integriert sein.

Um beispielsweise eine Hydraulikfluidversorgung der Lagereinrichtung des Planetenrades auf einfache Weise gewährleisten zu können, kann die Spanneinrichtung einen Hydraulikfluidzuführkanal aufweisen, durch den Hydraulikfluid in Richtung der beispielsweise als Gleitlager oder Wälzlager ausgeführten Lagereinrichtung förderbar ist.

Wenn die Trägereinrichtung mit wenigstens einer im Wesentlichen in radialer Richtung des Planetenrads verlaufenden Ausnehmung ausgeführt ist, kann der Lagereinrichtung insbesondere durch die Einspanneinrichtung gefördertes Hydraulikfluid auf einfache Weise zugeführt werden.

Darüber hinaus betrifft die Erfindung ein Strahltriebwerk mit einer erfindungsgemäßen Planetengetriebevorrichtung.

Sowohl die in den Patentansprüchen angegeben Merkmale als auch die in den nachfolgenden Ausführungsbeispielen der erfindungsgemäßen Planetengetriebevorrichtung angegeben Merkmale sind jeweils für sich alleine oder in beliebiger Kombination miteinander geeignet, den erfindungsgemäßen Gegenstand weiterzubilden.

Weitere Vorteile und vorteilhafte Ausführungsformen des erfindungsgemäßen Gegenstandes ergeben sich aus den Patentansprüchen und aus den nachfolgend unter Bezugnahme auf die Zeichnung prinzipmäßig beschriebenen Ausführungsbeispielen, wobei in der Beschreibung der verschiedenen Ausführungsbeispiele zugunsten der Übersichtlichkeit für bau- und funktionsgleiche Bauteile dieselben Bezugszeichen verwendet werden.

Es zeigt:
- Fig. 1: eine vereinfachte Schnittdarstellung eines Strahltriebwerks, wobei ein Bläser über eine Planetengetriebevorrichtung mit einer Niederdruckturbine in Wirkverbindung steht;
- Fig. 2: eine stark vereinfachte Teilschnittdarstellung eines Bereichs de Planetengetriebevorrichtung gemäß Fig. 1, wobei die Planetengetriebevorrichtung im dargestellten Bereich ein Planetenrad, einen zwei Planetenträgerbereiche umfassenden Planetenträger und eine mit den Planetenträgerbereichen zusammenwirkende Spanneinrichtung aufweist; und
- Fig. 3: eine Darstellung einer weiteren Ausführungsform der Planetengetriebevorrichtung.

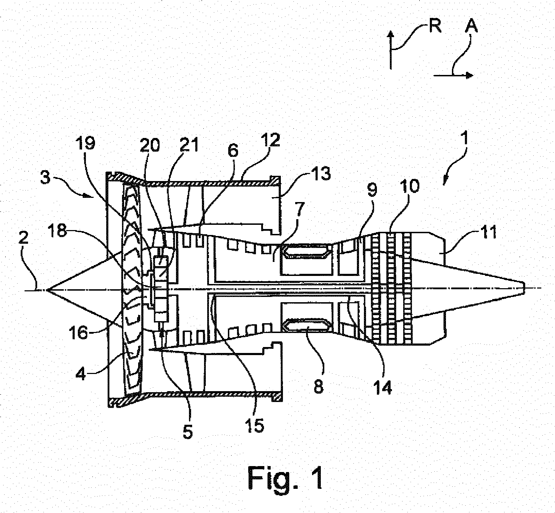

In Fig. 1 ist eine als Strahltriebwerk 1 eines Flugzeugs ausgeführte Strömungsmaschine mit einer nachfolgend näher beschriebenen Planetengetriebevorrichtung 5 gezeigt. Das Strahltriebwerk 1 ist eine Turbomaschine, mit der die Planetengetriebevorrichtung 5 vorteilhaft kombiniert werden kann. Aus dem Folgenden ergibt sich eindeutig, dass die Planetengetriebevorrichtung 5 auch bei anderweitig ausgeführten Turbomaschinen eingesetzt werden kann.

Das Strahltriebwerk 1 weist eine Hauptdrehachse 2 auf. Des Weiteren umfasst das Strahltriebwerk 1 in axialer Strömungsrichtung A einen Lufteinlass 3, einen Bläser 4, die Planetengetriebevorrichtung 5, einen Niederdruckverdichter 6, einen Hochdruckverdichter 7, eine Verbrennungseinrichtung 8, eine Hochdruckturbine 9, eine Niederdruckturbine 10 und eine Ausströmdüse 11. Eine Triebwerksgondel 12 umgibt das Strahltriebwerk 1 und begrenzt den Lufteinlass 3.

Das Strahltriebwerk 1 arbeitet in herkömmlicher Weise, wobei in den Lufteinlass 3 eintretende Luft durch den Bläser 4 beschleunigt wird, um zwei Luftströme zu erzeugen. Ein erster Luftstrom strömt in den Zwischendruckverdichter 6 und ein zweiter Luftstrom wird durch einen Nebenstromkanal 13 bzw. Bypasskanal geführt, um einen Antriebsschub bereitzustellen. Der Niederdruckverdichter 6 komprimiert den ihm zugeführten Luftstrom, bevor die Luft im Bereich des Hochdruckverdichters 7 weiter verdichtet wird.

Die aus dem Hochdruckverdichter 7 ausströmende Druckluft wird in die Verbrennungseinrichtung 8 eingeleitet, wo eine Vermischung mit Kraftstoff erfolgt und das Kraftstoff-Luft-Gemisch verbrannt wird. Die entstehenden heißen Verbrennungsprodukte expandieren und treiben dabei die Hochdruckturbine 9 und die Niederdruckturbine 10 an, bevor sie über die Ausströmdüse 11 ausgeführt werden, um einen zusätzlichen Antriebsschub bereitzustellen. Die Hochdruckturbine 9 und die Niederdruckturbine 10 treiben mittels einer Hochdruckwelle 14 bzw. einer Niederdruckwelle 15 den Hochdruckverdichter 7 bzw. den Niederdruckverdichter 6 an. Die die Niederdruckturbine 10 mit dem Niederdruckverdichter 6 koppelnde Niederdruckwelle 15 ist über die ein Untersetzungsgetriebe darstellende Planetengetriebevorrichtung 5 mit dem Bläser 4 gekoppelt, wobei ein über die Niederdruckwelle 15 an der Planetengetriebevorrichtung 5 anliegendes Antriebsmoment der Standübersetzung der Planetengetriebevorrichtung 5 entsprechend angehoben und einer Bläserwelle 16 zugeführt wird. Wenn der Bläser 4 von der Niederdruckturbine 10 angetrieben wird, wird die Drehzahl der Niederdruckwelle 15 der Übersetzung der Planetengetriebevorrichtung 5 entsprechend reduziert und die Bläserwelle 16 sowie der Bläser 4 mit dieser reduzierten Drehzahl und mit einem gegenüber dem an der Niederdruckwelle 15 anliegenden Drehmoment erhöhten Drehmoment angetrieben.

Bei der gezeigten Ausführung der Planetengetriebevorrichtung 5 ist ein Sonnenrad 18 der Planetengetriebevorrichtung 5 drehfest mit der Niederdruckwelle 15 und ein Planetenträger 19 der Planetengetriebevorrichtung 5 drehfest mit der Bläserwelle 16 verbunden. Ein Hohlrad 20 der Planetengetriebevorrichtung 5 ist gehäusefest angebunden. Somit liegt eine als epizyklisches Planetengetriebe ausgeführte Planetengetriebevorrichtung 5 vor, bei der im Betrieb des Strahltriebwerks 1 große Fliehkräfte auf Planetenräder 21 der Planetengetriebevorrichtung 5 wirken.

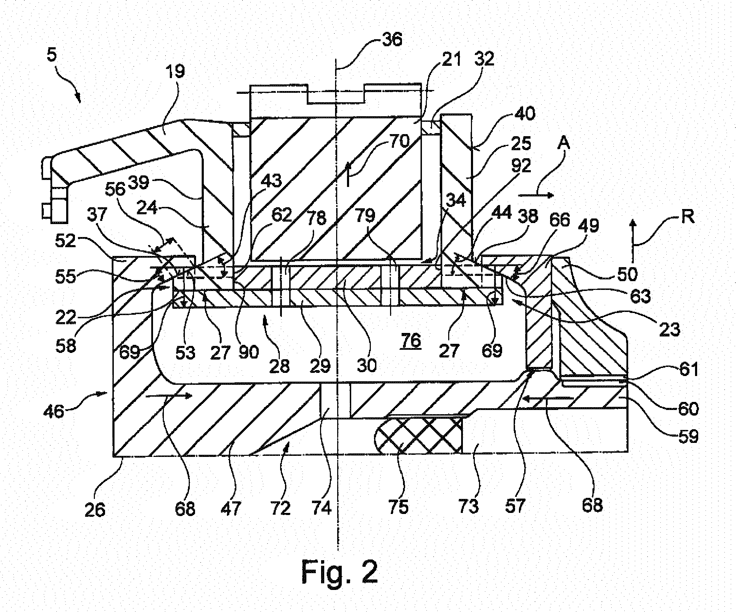

In Fig. 2 ist ein Bereich der Planetengetriebevorrichtung 5 gezeigt, in dem eine Anbindung eines Planetenrades 21 an den vorliegend einteilig ausgebildeten Planetenträger 19 vorliegt. Der Planetenträger 19 weist zwei mit plattenförmigen Bereichen ausgebildete Planetenträgerbereiche 24, 25 auf, die in einem bezüglich einer Mittelachse 26 des Planetenrades 21 inneren Bereich jeweils über eine Presspassung 27 mit einer als Hülse bzw. Bolzen ausgeführten Trägereinrichtung 28 verbunden sind. Die Trägereinrichtung 28 weist vorliegend ein über die Presspassung 27 mit den Planetenträgerbereichen 24, 25 verbundenes Trägerelement 29 und ein Abstandshalteelement 30 auf, das mit Anschlagflächen 90, 91 ausgeführt ist, an den die Planetenträgerbereiche 24, 25 anliegen. Das Abstandshalteelement 30 ist in Bezug auf die Mittelachse 26 in radialer Richtung R außerhalb des Trägerelements 29 insbesondere an dieses angrenzend angeordnet. Mittels des Abstandshalteelements 30 ist ein Abstand in axialer Richtung A des Strahltriebwerks 1 zwischen den Planetenträgerbereichen 24, 25 definiert. Bei einer alternativen Ausführung können das Trägerelement 29 und das Abstandshalteelement 30 integral bzw. einstückig miteinander ausgeführt sein.

Alternativ hierzu besteht auch die Möglichkeit, den Planetenträger mehrteilig auszuführen.

Das Planetenrad 21 ist vorliegend mittels einer als Gleitlager ausgeführten Lagereinrichtung 34 an dem als Buchse ausgeführten Abstandshalteelement 30 gelagert. Dabei ist das Planetenrad 21 in axialer Richtung zwischen den Planetenträgerbereichen 24 und 25 angeordnet.

Sowohl der erste Planetenträgerbereich 24 als auch der zweite Planetenträgerbereich 25 weisen im Bereich von zu einer Längsmittelebene 36 des Planetenrades 21 abgewandten Außenseiten 39, 40 jeweils eine einen Verbindungsbereich 22, 23 mit der Trägereinrichtung 28 in Umfangsrichtung umfassende Konusfläche 37 bzw. 38 auf. Die Konusflächen 37 und 38 der Planetenträgerbereiche 24 und 25 sind jeweils als Außenkonus ausgeführt und überragen die Außenseiten 39 und 40 der Planetenträgerbereiche 24 und 25. Dabei nimmt der Durchmesser der Konusflächen 37 und 38 jeweils ausgehend von den Außenseiten 39 und 40 in axialer Richtung A nach außen stetig ab. Die Konusflächen 37 und 38 schließen dabei gegenüber der axialen Richtung A bzw. einer Drehachse des Planetenrades 21 jeweils einen Winkel 43 bzw. 44 ein, die vorzugsweise jeweils zwischen 1° und 10° liegen.

Es ist weiterhin eine als Zugankereinrichtung ausgeführte Spanneinrichtung 46 vorgesehen, die ein Koppelelement 47 aufweist. Das Koppelelement 47 wirkt zusätzlich auf der dem Planetenrad 21 abgewandten Außenseite 40 des Planetenträgerbereiches 25 mit einem Scheibenelement 49 und einem Spannelement 50 zusammen. Das bolzenartige Koppelelement 47 ist in einem ersten axialen Endbereich einstückig mit einem ankerförmigen Spannelement 52 ausgeführt, das mit einer auf die Konusfläche 37 des Planetenträgerbereiches 24 abgestimmten Konusfläche 53 ausgebildet ist. Die Konusfläche 53 ist als Innenkonus ausgeführt und wirkt in montiertem Zustand der Spanneinrichtung 46 in radialer Richtung R von radial außen mit dem Außenkonus bzw. der Konusfläche 37 des ersten Planetenträgerbereiches 24 zusammen.

In montiertem Betriebszustand nimmt der Innendurchmesser der Konusfläche 53 ausgehend von einem der Außenfläche 39 des Planetenträgerbereiches 24 zugewandten Bereich in Richtung eines von der Außenseite 39 abgewandten Bereiches stetig ab. Des Weiteren schließt die Konusfläche 53 mit der axialen Richtung A einen Winkel 55 ein, der gleich dem Winkel 43 zwischen der Konusfläche 37 und der axialen Richtung A ist.

Eine Projektion einer Fläche 56 in radialer Richtung R, die einem Überdeckungsbereich bzw. einem Anlagebereich zwischen der Konusfläche 37 des Planetenträgerbereiches 24 und der Konusfläche 53 entspricht, wird mindestens als Anlagefläche 58 zwischen dem Planetenträgerbereich 24 und der Trägereinrichtung 29 vorgesehen. Dadurch ist zwischen dem Planetenträgerbereich 24 und der Trägereinrichtung 29 eine ausreichende Haltekraft erzeugbar, über die eine Relativdrehbewegung zwischen der Trägereinrichtung 29 und dem Planetenträgerbereich 24 sicher vermieden werden kann. Zusätzlich wird auch in axialer Richtung als Anlagefläche 62 zwischen dem Planetenträgerbereich 24 und der Trägereinrichtung 24 bzw. an dessen Abstandshalteelement 30 mindestens die Projektion der Fläche 56 in axialer Richtung A vorgesehen.

Das Scheibenelement 49 weist eine Innenbohrung 57 auf, so dass das Scheibenelement 49 über einen Endbereich 59 des Koppelelements 47 führbar ist. Das als Mutter ausgeführte Spannelement 50 ist mit einem Innengewinde 61 ausgeführt, das zum Zusammenwirken mit einem im Endbereich 59 des Koppelelements 47 vorgesehenen Außengewinde 60 vorgesehen ist.

Das Scheibenelement 49 ist weiterhin mit einer als Innenkonus ausgebildeten Konusfläche 63 ausgeführt, die in montiertem Betriebszustand der Planetengetriebevorrichtung 5 mit der Konusfläche 38 des Planetenträgerbereiches 25 zusammenwirkt. Dabei nimmt der Durchmesser der Konusfläche 63 ausgehend von einem der Außenfläche 40 des Planetenträgerbereiches 25 zugewandten Bereich in Richtung eines von der Außenfläche 40 abgewandten Bereiches der Konusfläche 63 stetig ab. Die Konusfläche 63 des Scheibenelements 49 schließt dabei mit der axialen Richtung A der Planetengetriebevorrichtung 5 einen Winkel 66 ein, der gleich dem Winkel 44 ist.

Während der Montage der Planetengetriebevorrichtung 5 wird das Koppelelement 47 mit seinem das Außengewinde 60 aufweisenden Ende zunächst in axialer Richtung A durch den Planetenträgerbereich 24 und die Trägereinrichtung 29 geführt, bis das Außengewinde 60 aus dem Planetenträgerbereich 25 vorkragt und die Konusflächen 37 und 53 aneinander anliegen. Anschließend wird das Scheibenelement 49 über den Endbereich 59 des Koppelelementes 47 geführt und schließlich durch Aufschrauben des Spannelementes 50 auf das Koppelelement 47 über das Spannelement 50 zunehmend mit seiner Konusfläche 63 gegen die Konusfläche 38 des Planetenträgerbereiches 25 gedrückt, während die Konusfläche 53 des Koppelelementes 47 gleichzeitig an die Konusfläche 38 des Planetenträgerbereiches 24 gepresst wird. Entsprechend des vorgesehenen Anzugsmoments des Spannelementes 50 wird eine in Richtung des Pfeils 68 wirkende Zugkraft an dem Verbund angelegt. Aus dieser axialen Zugkraft resultiert eine radial nach innen gerichtete Druckkraft, deren Wirkrichtung der in Fig. 2 gezeigte Pfeil 69 angibt.

Die Druckkraft resultiert aus den Wirkverbindungen im Bereich zwischen den Konusflächen 37 und 38 der Planetenträgerbereichen 24 und 25 und den Konusflächen 53 und 61 der Spanneinrichtung 46. Die Druckkraft wirkt einer im Betrieb an dem Planetenrad 21 in Richtung des Pfeils 70 angreifenden Zentrifugalkraft entgegen. Die aus der Druckkraft seitens der Spanneinrichtung 46 und der Presspassung 27 zwischen der Trägereinrichtung 29 und den Planetenträgerbereichen 24 und 25 jeweils resultierenden Haltekräfte werden von der Zentrifugalkraft erst dann überwunden, wenn die Belastungen im Bereich der Planetenträgerbereiche 24 und 25 eingeleitet werden, die die über die Spanneinrichtung 46 im Bereich der Planetenträgerbereiche 24 und 25 erzeugten Vorspannung egalisieren und übersteigen und dann eine Relativdrehbewegung zwischen der Trägereinrichtung 29 und den Planetenträgerbereichen 24 und 25 begünstigen bzw. zulassen.

In Fig. 2 sind weiterhin vereinfacht Komponenten eines zur Versorgung des Gleitlagers 34 mit Hydraulikfluid vorgesehenen Hydraulikkreislaufs 72 gezeigt. Das Koppelelement 47 weist hierbei einen ausgehend von dem zweiten Endbereich 59 in axialer Richtung A in Richtung der Längsmittelebene 36 verlaufenden Hydraulikfluidzuführkanal 73 auf, in dem vorliegend ein Hydraulikfluidfilter 75 angeordnet ist. An den Hydraulikfluidzuführkanal 73 schließt sich ein in radialer Richtung R im Bereich der Längsmittelebene 36 angeordneter weiterer Hydraulikfluidzuführkanal 74 an. Über die Hydraulikfluidzuführkanäle 73, 74 ist ein von der Spanneinrichtung 46 und der Halteeinrichtung 28 begrenzter Raum 76 mit Hydraulikfluid versorgbar, wobei der Raum 76 durch das Zusammenwirken der Einfasseinrichtungen 24, 25 mit der Einspanneinrichtung 46 besonders gut gegenüber der Umgebung abgedichtet ist. Über vorliegend zwei, in radialer Richtung R durch die Halteeinrichtung 28 verlaufende Ausnehmungen 78, 79 ist in dem Raum 76 befindliches Hydraulikfluid dem Gleitlager 34 zuführbar.

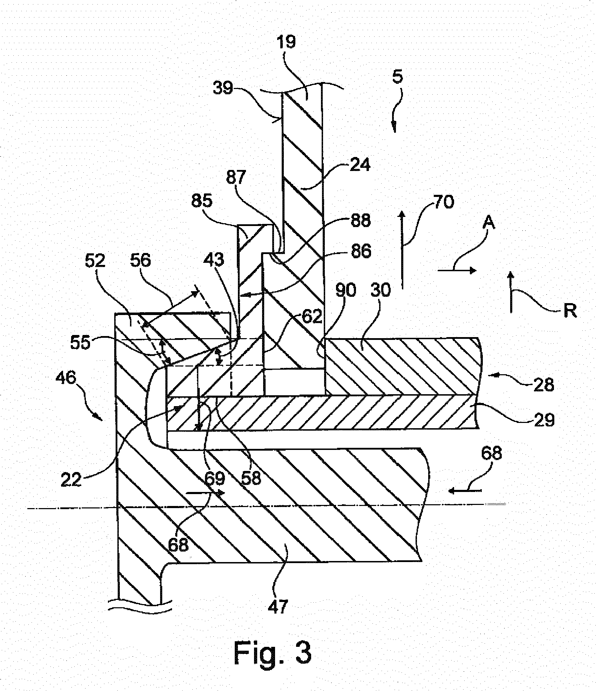

Fig. 3 zeigt eine weitere Ausführungsform der Planetengetriebevorrichtung 5, bei der die Spanneinrichtung 46 in dem mit dem Planetenträgerbereich 24 zusammenwirkenden Bereich mit dem ankerförmigen Spannelement 52 ausgebildet ist. Da die Planetengetriebevorrichtung 5 gemäß Fig. 3 grundsätzlich den zu Fig. 2 beschriebenen Aufbau aufweist, werden in der nachfolgenden Beschreibung lediglich die Unterschiede zwischen den Planetengetriebevorrichtungen 5 gemäß Fig. 2 und Fig. 3 näher erläutert. Bezüglich des weiteren Aufbaus und der weiteren Funktionsweise der Planetengetriebevorrichtung 5 gemäß Fig. 3 wird daher auf die vorstehende Beschreibung zu Fig. 2 verwiesen.

Die Konusfläche 37 des Planetenträgerbereiches 24 ist im Bereich eines Scheibenelementes 85 vorgesehen, das an der Außenseite 39 des Planetenträgerbereiches 24 anliegt. Dabei ist der Planetenträgerbereich 24 im Bereich seiner Außenseite 39, an der das Scheibenelement 85 am Planetenträgerbereich 24 anliegt, mit einem Ringbund 86 ausgebildet und weist damit in diesem Bereich eine größere axiale Breite auf. Damit ist die Außenseite 39 mit einer sich in Umfangsrichtung des Planetenträgerbereiches 24 erstreckenden Anlagefläche 87 ausgeführt, an der das Scheibenelement 85 mit einer ebenfalls sich in Umfangsrichtung des Scheibenelementes 85 erstreckenden Anlagefläche 88 anliegt und an der das Scheibenelement 85 in radialer Richtung am Planetenträgerbereich 24 zentriert ist.

Im montierten Zustand der Planetengetriebevorrichtung 5 wird das Scheibenelement 85 von der Spanneinrichtung 46 sowohl in axialer Richtung A als auch in radialer Richtung R gegen den Planetenträgerbereich 24 gedrückt. Zusätzlich stellt die Spanneinrichtung 46 über das Scheibenelement 85 die Presspassung mit der Trägereinrichtung 28 her, die die zur Vermeidung von die Lebensdauer der Planetengetriebevorrichtung 5 herabsetzenden Drehbewegungen der Trägereinrichtung 28 gegenüber dem Planetenträgerbereich 14 bzw. im vorliegenden Fall gegenüber dem Scheibenelement 85 erforderlichen Haltekräfte erzeugt.

In Abhängigkeit des jeweils vorliegenden Anwendungsfalles besteht alternativ dazu oder zusätzlich hierzu auch die Möglichkeit, die Konusfläche 38 des Planetenträgerbereiches 25 wie bei dem Planetenträgerbereich 24 gemäß Fig. 3 im Bereich eines zusätzlichen Scheibenelementes in dem zu Fig. 3 beschriebenen Umfang vorzusehen.

### Bezugszeichenliste

- 1: Strömungsmaschine; Strahltriebwerk
- 2: Drehachse
- 3: Lufteinlass
- 4: Bläser
- 5: Planetengetriebevorrichtung
- 6: Niederdruckverdichter
- 7: Hochdruckverdichter
- 8: Verbrennungseinrichtung
- 9: Hochdruckturbine
- 10: Niederdruckturbine
- 11: Ausströmdüse
- 12: Triebwerksgondel
- 13: Nebenstromkanal
- 14: Hochdruckwelle
- 15: Niederdruckwelle
- 16: Bläserwelle
- 18: Sonnenrad
- 19: Planetenträger
- 20: Hohlrad
- 21: Planetenrad
- 22, 23: Verbindungsbereich
- 24: Planetenträgerbereich
- 25: Planetenträgerbereich
- 26: Mittelachse des Planetenrads
- 27: Presspassung
- 28: Trägereinrichtung
- 29: Trägerelement
- 30: Abstandshalteelement; Buchse
- 34: Lagereinrichtung; Gleitlager
- 36: Längsmittelebene des Planetenrades
- 37: Konusfläche des Planetenträgerbereiches 24
- 38: Konusfläche des Planetenträgerbereiches 25
- 39: Außenseite des Planetenträgerbereiches 24
- 40: Außenseite des Planetenträgerbereiches 25
- 43, 44: Winkel
- 46: Spanneinrichtung
- 47: Koppelelement
- 49: Scheibenelement
- 50: Spannelement; Mutter
- 52: ankerförmiges Spannelement
- 53: Konusfläche des Spannelements 52
- 55: Winkel
- 56: Fläche
- 57: Innenbohrung des Scheibenelements
- 58: Anlagefläche
- 59: Endbereich des Koppelelements
- 60: Außengewinde des Einspannelements
- 61: Innengewinde des Spannelements
- 62: Anlagefläche
- 63: Konusfläche des Scheibenelements 49
- 66: Winkel
- 68, 69, 70: Pfeil
- 72: Hydraulikkreislauf
- 73: Hydraulikfluidzuführkanal
- 74: weiterer Hydraulikfluidzuführkanal
- 75: Hydraulikfluidfilter
- 76: Raum
- 78, 79: Ausnehmungen
- 85: Scheibenelement
- 86: Ringbund
- 87, 88: Anlagefläche
- 90, 91: Anschlagfläche der Trägereinrichtung 28
- A: axiale Richtung der Strömungsmaschine
- R: radiale Richtung des Planetenrads

## Patentansprüche

1. Planetengetriebevorrichtung (5) für eine Strömungsmaschine (1) mit einem Planetenträger (19) und wenigstens einem darauf drehbar angeordneten Planetenrad (21), wobei das Planetenrad (21) in axialer Richtung zwischen zwei Planetenträgerbereichen (24, 25) angeordnet ist, mit welchen jeweils eine Trägereinrichtung (28) drehfest verbunden ist, auf der das Planetenrad (21) drehbar gelagert ist, **dadurch gekennzeichnet, dass** die Planetenträgerbereiche (24, 25) auf ihren dem Planetenrad (21) abgewandten Außenseiten (39, 40) mit jeweils einer einen Verbindungsbereich (22, 23) mit der Trägereinrichtung (28) umgreifenden Konusfläche (37, 38) ausgebildet sind, deren Durchmesser mit zunehmendem axialen Abstand vom Planetenrad (21) abnehmen und die jeweils mit darauf abgestimmten Konusflächen (53, 63) einer Spanneinrichtung (46), die die Konusflächen (37, 38) der Planetenträgerbereiche (24, 25) radial umfassen, derart zusammenwirken, dass an den Verbindungsbereichen (23, 24) zwischen der Trägereinrichtung (28) und den Planetenträgerbereichen (24, 25) jeweils aus einer über ein Koppelelement (47) der Spanneinrichtung (46) auf die Konusflächen (37, 38) der Planententrägerbereiche (24, 25) aufgeprägten axialen Spannkraft der Spanneinrichtung (46) resultierende und die Verbindungsbereiche (22, 23) in radialer Richtung nach innen verpressende Kraft angreift, wobei die Konusflächen (53, 63) der Spanneinrichtung über das Koppelelement (47) miteinander in Wirkverbindung stehen.

2. Planetengetriebevorrichtung nach Anspruch 1, **dadurch gekennzeichnet, dass** die Konusflächen (37, 38) der Planetenträgerbereiche (24, 25) und die Konusflächen (53, 63) der Spanneinrichtung (46) mit einer Drehachse des Planententrägers (19) jeweils einen Winkel zwischen 0,5° bis 30° einschließen.

3. Planetengetriebevorrichtung nach einem der Ansprüche 1 oder 2, **dadurch gekennzeichnet, dass** die Spanneinrichtung (46) mit einem Scheibenelement (49) und einem Spannelement (50) ausgeführt ist, wobei das Spannelement (50) zur Erzeugung der in axialer Richtung (A) der Spanneinrichtung (46) wirkenden Spannkraft auf das Koppelelement (47) aufschraubbar ist, und wobei das Scheibenelement (49) mit einer der Konusflächen (63) der Spanneinrichtung (46) ausgeführt und in montiertem Zustand der Spanneinrichtung (46) auf der dem Planetenrad (21) abgewandten Seite eines der Planetenträgerbereiches (25) zwischen dem Spannelement (50) und dem Planetenträgerbereich (25) angeordnet ist.

4. Planetengetriebevorrichtung nach Anspruch 3, **dadurch gekennzeichnet, dass** das Scheibenelement (49) und das Spannelement (50) einstückig ausgebildet sind.

5. Planetengetriebevorrichtung nach Anspruch 3, **dadurch gekennzeichnet, dass** das Scheibenelement (49) und das Spannelement (50) als separate Bauteile ausgeführt sind.

6. Planetengetriebevorrichtung nach einem der Ansprüche 1 bis 5, **dadurch gekennzeichnet, dass** das Koppelement (47) einstückig mit einem Spannelement (52) der Spanneinrichtung (46) ausgebildet ist, wobei eine der Konusflächen (53) der Spanneinrichtung (46) im Bereich des Spannelementes (52) vorgesehen ist und das Spannelement (52) auf der dem Planetenrad (21) abgewandten Seite des Planetenträgerbereiches (24) angeordnet ist, mit dessen Konusfläche (37) die Konusfläche (53) des Spannelementes (52) in Wirkverbindung steht.

7. Planetengetriebevorrichtung nach einem der Ansprüche 1 bis 6, **dadurch gekennzeichnet, dass** die Trägereinrichtung (28) jeweils Anschlagflächen (90, 92) aufweist, mit den die Trägereinrichtung (28) mit den Planetenträgerbereichen (24, 25) im Bereich von dem Planetenrad (21) zugewandten Seiten der Planetenträgerbereiche (24, 25) zusammenwirkt und über die ein Abstand in axialer Richtung (A) zwischen den Planetenträgerbereichen (24, 25) definiert ist.

8. Planetengetriebevorrichtung nach einem der Ansprüche 1 bis 7, **dadurch gekennzeichnet, dass** die Spanneinrichtung (46) wenigstens einen Hydraulikfluidzuführkanal (73, 74) aufweist, durch den Hydraulikfluid in Richtung einer Lagereinrichtung (34) des Planetenrads (21) auf der Trägereinrichtung (28) förderbar ist.

9. Planetengetriebevorrichtung nach Anspruch 8, **dadurch gekennzeichnet, dass** die Trägereinrichtung (28) mit wenigstens einer, im Wesentlichen in radialer Richtung (R) des Planetenrads (21) verlaufenden Ausnehmung (78, 79) ausgeführt ist, durch die der Lagereinrichtung (34) Hydraulikfluid zuführbar ist.

10. Strahltriebwerk (1) mit einer Planetengetriebevorrichtung (5) gemäß einem der Patentansprüche 1 bis 9.
